# EUROPEAN PATENT SPECIFICATION

(11) **EP 2 907 337 B1**
(45) Date of publication and mention of the grant of the patent: **21.06.2017**
(21) Application number: 12886208.3
(22) Date of filing: 12.10.2012
(51) Int. Cl.: H04W 28/24, H04W 76/02

(54) **BEARER MANAGEMENT IN THE RAN BASED ON QUALITY OF SERVICE**
TRÄGERMANAGEMENT IN EINEM RAN AUF BASIS DER DIENSTQUALITÄT
GESTION DE PORTEUSE DANS UN RAN BASÉE SUR LA QUALITÉ DE SERVICE

(43) Date of publication of application: 19.08.2015
(73) Proprietor: Telefonaktiebolaget LM Ericsson (publ), 164 83 Stockholm (SE)
(72) Inventor: RUNE, Johan, S-181 29 Lidingö (SE); MILITANO, Francesco, S-171 52 Solna (SE)
(74) Representative: Brann AB
(86) International application number: PCT/SE2012/051099
(87) International publication number: WO 2014/058369

(56) References cited:
- WO-A1-2012/172384
- WO-A1-2012/172384
- US-A1- 2011 032 898
- US-A1- 2011 122 886
- US-A1- 2011 122 886
- US-A1- 2011 199 903
- US-A1- 2011 199 903
- US-A1- 2012 027 025
- US-A1- 2012 027 025
- US-A1- 2012 246 212
- US-A1- 2013 044 705

## Description

### Technical Field

The invention relates to a mobile communication network, and in particular relates to a method of operating a node in a radio access part of the network or a node in a core part of the network to establish an additional bearer for a mobile communication device to improve service quality for the device.

### Background

Cellular network standards, such as the 3GPP family of standards, use Quality of Service (QoS) to differentiate different services that can be provided for a mobile communication device so that services with strict requirements on, for example, bit rate and/or latency, may either be guaranteed the desired transmission characteristics or receive a high relative priority so that their chances of experiencing the appropriate transmission characteristics increase. Such services can include audio and/or video streaming, Voice-over-IP (VoIP) calls, Internet browsing, etc.

In systems such as the Universal Mobile Telecommunication System (UMTS) and the Evolved Packet System (EPS), the choice of QoS for a bearer between the mobile device and the network is controlled by policies managed by a Policy and Charging Rules Function (PCRF) which may derive suitable QoS settings (e.g. based on policies) from application information received from application servers, and which may communicate them to the relevant nodes in the network, for example the Gateway GPRS Support Node (GGSN) in UMTS and the Packet Data Network (PDN) Gateway (PGW) in EPS. This arrangement is satisfactory for network operator controlled services, such as IP Multimedia Subsystem (IMS) based services.

However, in present mobile communication networks, many of the services (particularly IP based services) and applications that are commonly used by end-users are so-called Over-The-Top (OTT) services, which means that they are accessed across the Internet and outside of the immediate control of the operator of the cellular network. As a bearer established for plain Internet access is typically a 'best-effort' bearer, the service flows may often receive sub-optimal treatment, potentially resulting in a poor Quality of Experience (QoE) for the user of the mobile device.

To enable some form of special treatment for OTT service flows, cellular operators can make use of Deep Packet Inspection (DPI) of the data transferred in the user plane, typically at the entry of data to the core network, in order to detect service flows for which some special treatment is desired (for example for which a certain QoS or rate shaping should be provided).

In UMTS a bearer is normally established for a mobile communication device (referred to as a user equipment - UE - in UMTS and EPS) when it is connected to the network. This bearer is denoted the "primary PDP (Packet Data Protocol) context" and is typically a best-effort bearer. To provide different QoS for different flows, one or more other bearers has/have to be established in parallel with the primary PDP context. Such a parallel bearer is denoted the "secondary PDP context".

The principles in EPS are similar, but the terminology is different. A "default bearer" corresponds to the UMTS primary PDP context and a "dedicated bearer" corresponds to the UMTS secondary PDP context. In contrast to UMTS, a default bearer is always established when a UE attaches to an EPS network and it is maintained until the UE (explicitly or implicitly) detaches from the network, whereas in UMTS a UE may be attached to the network without having a primary PDP context.

WO 2012/172384 A1 describes a method for providing quality of service capabilities for a radio network controller/serving node in a telecommunication network. US 2012/027025 A1 describes a method for bearer reservation, maintenance, and use in a communication system, in that, the method is performed by an intermediary function (IF) in an enterprise network.
US 2011/0199903 A1 describes a method relating to policy and charging in telecommunication networks. US 2011/122886 A1 describes a method for associating a data packet with a packet bearer in a user equipment of a communication network.

### Summary

It has been noted that the way in which DPI and other user data analysis techniques are used is not fully effective in providing the most appropriate treatment of OTT service flows. In addition, it has been noted that mechanisms and information available in nodes of the radio access network (RAN) are also not utilized in determining the best way to handle OTT service flows and to some extent flows pertaining to non-OTT services, e.g. operator controlled services.

Therefore, it is an object to provide an alternative way of operating a node in the radio access network and/or core network to provide improved service quality for a mobile communication device or the user.

According to a first aspect, there is provided a method of operating a node in a radio access network, the method comprising obtaining an indication of the service quality desired for a traffic flow between a mobile communication device and a core network; determining whether an additional bearer is required between the mobile
communication device and the core network based on the obtained indication; and sending a message to a node in the core network to initiate a procedure to establish an additional bearer between the mobile communication device and the core network if it is determined that an additional bearer is required.

In some embodiments, the step of obtaining an indication of the service quality required for a traffic flow between the mobile communication device and the core network comprises inspecting the data carried in the traffic flow to determine the desired service quality.

Preferably, the step of obtaining an indication of the service quality desired for a traffic flow between the mobile communication device and the core network uses Deep Packet Inspection, DPI, to inspect the data carried in the traffic flow to determine the desired service quality.

In alternative embodiments, the step of obtaining an indication of the service quality desired for a traffic flow between the mobile communication device and the core network comprises obtaining the indication of the service quality from the or another node in the core network.

In preferred embodiments, the method can further comprise the step of obtaining an indication of current radio resource usage for the mobile communication device (to which the concerned traffic flow pertains) and/or other mobile communication devices associated with the node in the radio access network; wherein the step of determining whether an additional bearer is required between the mobile communication device and the core network is further based on the obtained indication of current radio resource usage.

The indication of current radio resource usage can comprise current cell load and/or channel quality for the mobile communication device (to which the concerned traffic flow pertains) and/or other mobile communication devices associated with the node in the radio access network.

The service quality can be a Quality of Service, QoS, for the service in the traffic flow and/or a Quality of Experience, QoE, for the user of the traffic flow.

In some embodiments, the message can comprise an indication of the service quality desired and/or the identity of an existing bearer between the mobile communication device and the core network that is carrying the traffic flow.

In one particular implementation, the node in the radio access network is an evolved-UMTS Terrestrial Radio Access Network (E-UTRAN) NodeB, eNodeB, in an Evolved Packet System, EPS, network and the node in the core network is a Mobility Management Entity, MME, node.

In an EPS implementation, where the message comprises an indication of the identity of an existing bearer between the mobile communication device and the core network, the identity of the existing bearer in the message can comprise an E-UTRAN Radio Access Bearer, E-RAB, identity of the E-RAB that is carrying the traffic flow.

In an EPS implementation, the message can be an S1AP message that triggers the MME node to send a Bearer Resource Command to a serving gateway, SGW, node in the core network.

In another particular implementation, the node in the radio access network is a radio network controller, RNC, in a Universal Mobile Telecommunication System, UMTS, network and the node in the core network is a Serving GPRS Support Node, SGSN.

In a UMTS implementation, where the message comprises an indication of the identity of an existing bearer between the mobile communication device and the core network, the identity of the existing bearer can comprise a Radio Access Bearer, RAB, identity of the RAB that is carrying the traffic flow.

In a UMTS implementation, the message can be a Radio Access Network Application Part, RANAP, message that triggers the SGSN to send a Request Secondary PDP Context Activation message to the mobile communication device.

According to a second aspect, there is provided a node for use in a radio access network part of a communication network, the node comprising processing circuitry that is configured to obtain an indication of the service quality desired for a traffic flow between a mobile communication device and a core network; determine whether an additional bearer is required between the mobile communication device and the core network based on the obtained indication; and initiate transmission of a message to a node in the core network to initiate a procedure to establish an additional bearer between the mobile communication device and the core network if it is determined that an additional bearer is required.

In some embodiments, the processing circuitry can be configured to obtain an indication of the service quality desired for a traffic flow between the mobile communication device and the core network by inspecting the data carried in the traffic flow to determine the desired service quality.

Preferably, the processing circuitry can be configured to obtain the indication of the service quality desired for a traffic flow between the mobile communication device and the core network using Deep Packet Inspection, DPI, to inspect the data carried in the traffic flow to determine the desired service quality.

In alternative embodiments, the processing circuitry can be configured to obtain the indication of the service quality desired for a traffic flow between the mobile communication device and the core network from the or another node in the core network.

In preferred embodiments, the processing circuitry can be further configured to obtain an indication of current radio resource usage for the mobile communication device (to which the concerned traffic flow pertains) and/or other mobile communication devices associated with the node in the radio access network; and to determine whether an additional bearer is required between the mobile communication device and the core network using the obtained indication of current radio resource usage and the obtained indication of the desired service quality.

The indication of current radio resource usage can comprise current cell load and/or channel quality for the mobile communication device (to which the concerned traffic flow pertains) and/or other mobile communication devices associated with the node in the radio access network.

The service quality can be a Quality of Service, QoS, for the service in the traffic flow and/or a Quality of Experience, QoE, for the user of the traffic flow.

In some embodiments, the processing circuitry can be configured to include an indication of the desired service quality and/or the identity of an existing bearer between the mobile communication device and the core network that is carrying the traffic flow in the transmitted message.

In one particular implementation, the node in the radio access network is an E-UTRAN NodeB, eNodeB, in an Evolved Packet System, EPS, network and the node in the core network is a Mobility Management Entity, MME, node.

In an EPS implementation, where the processing circuitry is configured to include an indication of the identity of an existing bearer between the mobile communication device and the core network in the message, the processing circuitry can be configured to include an E-UTRAN Radio Access Bearer, E-RAB, identity of the E-RAB that is carrying the traffic flow in the message.

In an EPS implementation, the message can be an S1AP message that triggers the MME node to send a Bearer Resource Command to a serving gateway, SGW, node in the core network.

In another particular implementation, the node in the radio access network is a radio network controller, RNC, in a Universal Mobile Telecommunication System, UMTS, network and the node in the core network is a Serving GPRS Support Node, SGSN.

In a UMTS implementation, where the processing circuitry is configured to include an indication of the identity of an existing bearer between the mobile communication device and the core network, the processing circuitry can be configured to include the a Radio Access Bearer, RAB, identity of the RAB that is carrying the traffic flow in the message.

In a UMTS implementation, the message can be a Radio Access Network Application Part, RANAP, message that triggers the SGSN to send a Request Secondary PDP Context Activation message to the mobile communication device.

According to a third aspect, there is provided a method of operating a node in a core network, the method comprising receiving a message from a node in a radio access network indicating that an additional bearer is required for a traffic flow between a mobile communication device and the core network; and initiating a procedure to establish an additional bearer between the mobile communication device and the core network in response to the received message.

In some embodiments, the message can comprise an indication of the service quality desired and/or the identity of an existing bearer between the mobile communication device and the core network that is carrying the traffic flow.

In one particular implementation, the node in the radio access network is an E-UTRAN NodeB, eNodeB, in an Evolved Packet System, EPS, network and the node in the core network is a Mobility Management Entity, MME, node.

In an EPS implementation, the received message can be an S1AP message, and the step of initiating a procedure to establish an additional bearer can comprise sending a Bearer Resource Command to a serving gateway, SGW, node in the core network.

The received message can comprise an E-UTRAN Radio Access Bearer, E-RAB, identity of the E-RAB that is carrying the traffic flow between the mobile communication device and the core network.

In some EPS implementations, the method can further comprise the step of determining a Linked EPS Bearer Identity for the E-RAB that is carrying the traffic flow from the E-RAB identity in the received message.

The step of determining a Linked EPS Bearer Identity can further comprise translating the E-RAB identity in the received message into an EPS bearer identity and packet data network, PDN, connection; identifying the default bearer of the PDN connection; and identifying the Linked EPS Bearer Identity from the identified default bearer.

In another particular implementation, the node in the radio access network is a radio network controller, RNC, in a Universal Mobile Telecommunication System, UMTS, network and the node in the core network is a Serving GPRS Support Node, SGSN.

In a UMTS implementation, the received message can be a RANAP message, and the step of initiating a procedure to establish an additional bearer can comprise sending a Request Secondary PDP Context Activation message to the mobile communication device.

The received message can comprise a Radio Access Bearer, RAB, identity of the RAB that is carrying the traffic flow between the mobile communication device and the core network.

In some UMTS implementations, the method can further comprise the step of identifying the primary PDP context of the RAB that is carrying the traffic flow from the RAB identity comprised in the received message.

According to a fourth aspect, there is provided a node for use in a core network part of a communication network, the node comprising processing circuitry that is configured to receive a message from a node in a radio access network indicating that an additional bearer is required for a traffic flow between a mobile communication device and the core network; and initiate a procedure to establish an additional bearer between the mobile communication device and the core network in response to the received message.

In some embodiments, the message can comprise an indication of the desired service quality and/or the identity of an existing bearer between the mobile communication device and the core network that is carrying the traffic flow.

In one particular implementation, the node in the radio access network is an E-UTRAN NodeB, eNodeB, in an Evolved Packet System, EPS, network and the node in the core network is a Mobility Management Entity, MME, node.

In an EPS implementation, the message the processing circuitry is configured to receive can be an S1AP message, and the processing circuitry can be configured to initiate a procedure to establish an additional bearer by sending a Bearer Resource Command to a serving gateway, SGW, node in the core network.

The received message can comprise an E-UTRAN Radio Access Bearer, E-RAB, identity of the E-RAB that is carrying the traffic flow between the mobile communication device and the core network.

In some EPS implementations, the processing circuitry can be further configured to determine a Linked EPS Bearer Identity for the E-RAB that is carrying the traffic flow from the E-RAB identity in the received message.

The processing circuitry can be configured to determine a Linked EPS Bearer Identity by translating the E-RAB identity in the received message into an EPS bearer identity and packet data network, PDN, connection; identifying the default bearer of the PDN connection; and identifying the Linked EPS Bearer Identity from the identified default bearer.

In another particular implementation, the node in the radio access network is a radio network controller, RNC, in a Universal Mobile Telecommunication System, UMTS, network and the node in the core network is a Serving GPRS Support Node, SGSN.

In a UMTS implementation, the message the processing circuitry can be configured to receive is a RANAP message, and the processing circuitry can be configured to initiate a procedure to establish an additional bearer by sending a Request Secondary PDP Context Activation message to the mobile communication device.

The received message can comprise a Radio Access Bearer, RAB, identity of the RAB that is carrying the traffic flow between the mobile communication device and the core network.

In some UMTS implementations, the processing circuitry can be configured to identify the primary PDP context of the RAB that is carrying the traffic flow from the RAB identity comprised in the received message.

According to a fifth aspect, there is provided a communication network comprising at least one of a node for use in a radio access network as described above and a node for use in a core network part of a communication network as described above.

According to a sixth aspect, there is provided a computer program product comprising computer-readable code stored thereon, the computer-readable code being configured such that, on execution by a computer or suitable processing circuitry, the computer or processing circuitry performs any of the methods described above.

### Brief Description of the Drawings

Embodiments of the invention will now be described, by way of example only, with reference to the following drawings, in which:
Figure 1 is a block diagram of a network;
Figure 2 is a flow chart illustrating a method of operating a node in a radio access network in accordance with an embodiment of the invention;
Figure 3 is a flow chart illustrating a method of operating a node in a core network in accordance with an embodiment of the invention;
Figure 4 is a block diagram illustrating nodes in an Evolved Packet Service network;
Figure 5 is a signalling diagram illustrating the signalling required in an Evolved Packet System network to establish a new dedicated bearer to the user equipment according to embodiments of the invention;
Figure 6 is an illustration of part of an exemplary S1AP message used in a method according to certain embodiments of the invention;
Figure 7 is a block diagram illustrating nodes in a Universal Mobile Telecommunication System network;
Figure 8 is a signalling diagram illustrating the signalling required in a Universal Mobile Telecommunication System network to establish a new secondary PDP context to the user equipment according to embodiments of the invention;
Figure 9 is an illustration of part of an exemplary RANAP message used in a method according to certain embodiments of the invention;
Figure 10 is a block diagram of a node in the radio access network in accordance with an embodiment; and
Figure 11 is a block diagram of a node in the core network in accordance with an embodiment.

### Detailed Description

As described in more detail below, the invention is for use in mobile communication networks, for example third generation (3G) networks including Universal Mobile Telecommunications System (UMTS), Wideband Code Division Multiple Access (WCDMA) and High Speed Packet Access (HSPA) systems and fourth generation (4G) networks including Evolved Packet System (EPS), Long Term Evolution (LTE) and LTE-Advanced (LTE-A). Although particular embodiments of the invention are set out below for UMTS and EPS networks, it will be appreciated by those skilled in the art that the invention can be readily applied to any of the other network types mentioned above.

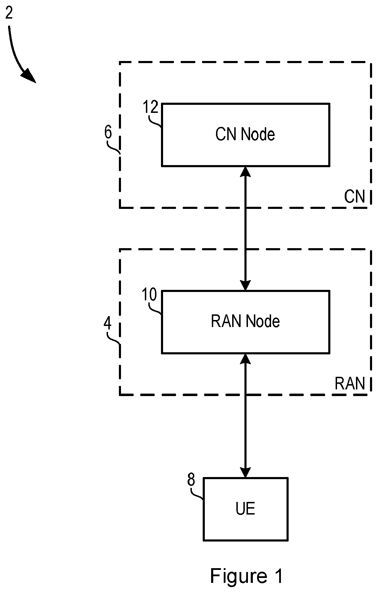

Figure 1 shows a network 2 in which the invention can be implemented. The network 2 is conceptually divided into two parts, a radio access network (RAN) part 4 and a core network (CN) part 6. The RAN 4 is the part of the network 2 that provides the radio interface to mobile communication devices 8 (also referred to as user equipments - UEs) to allow the UEs 8 to connect to the network 2. The CN 6 provides services to the UEs 8 connected to the RAN 4 from other networks, such as, for example, other mobile communication networks, a public switched telephone network (PSTN) or the Internet.

As shown in Figure 1, the RAN 4 comprises a node 10 (referred to as RAN node) that provides the radio interface to the UE 8 and the CN 6 comprises a node 12 (referred to as CN node) that connects to the RAN node 10. A further CN node may be provided in the CN 6 (although it is not shown in Figure 1) that connects the network 2 to one or more external networks (also not shown in Figure 1). Although a single node is shown in each of the RAN 4 and CN 6, it will be appreciated that in practice the RAN 4 and CN 6 may comprise more than one node, depending on the particular type of network being implemented.

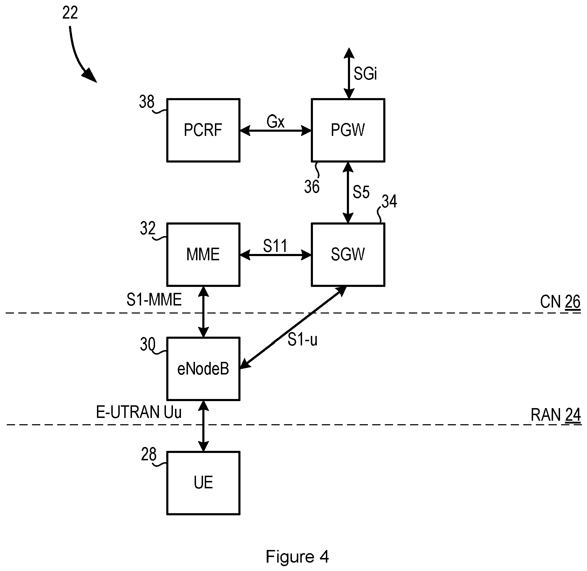

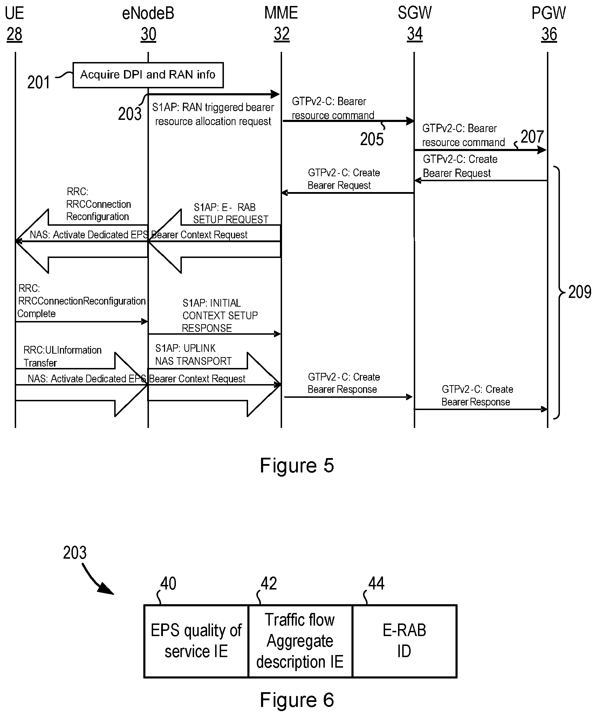

For example, as described in more detail below with regard to Figure 4, in an EPS network, the RAN node 10 can comprise an evolved-UMTS Terrestrial Radio Access Network (E-UTRAN) NodeB (eNodeB) that provides radio access to the UEs 8 and the eNodeB connects to two nodes in the CN 6, a Mobility Management Entity (MME) and a Serving Gateway (SGW). The SGW has an interface to the MME and to a Packet Data Network (PDN) Gateway (PGW), which in turn interfaces to external networks. In a UMTS network, as described in more detail below in connection with Figure 6, the RAN 4 comprises a number of NodeBs connected to a Radio Network Controller (RNC) that provide radio access to the UEs 8. The RNC is connected to a Serving GPRS Support Node (SGSN) in the CN 6. The SGSN interfaces with a Gateway GPRS Support Node (GGSN), which in turn interfaces to external networks.

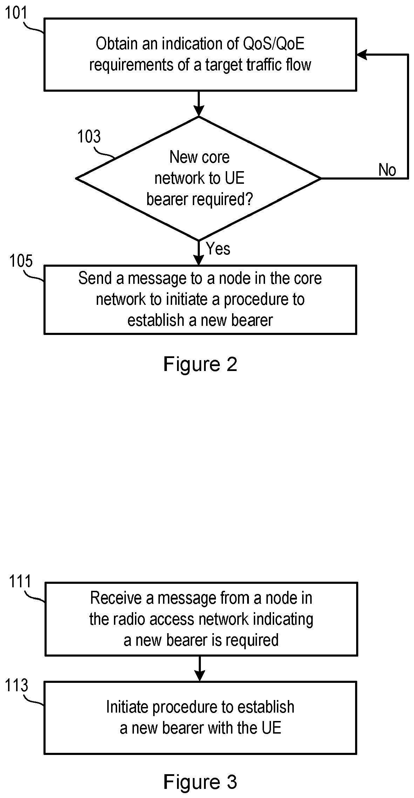

Figure 2 is a flow chart illustrating a method of operating a node 10 in a RAN 4 in order to provide improved service quality for a UE 8 or the user of the UE 8. The method in Figure 2 is applied to a UE 8 for which a new communication service or a new traffic flow is started and for which a bearer has been established between the UE 8 and RAN node 10. In this context, a communication service may be provided by an application server on the Internet or by an application server controlled by the operator of the cellular network (or by an application server in a corporate network), but it may also be e.g. peer-to-peer applications. Examples may include e.g. video services, such as YouTube, voice services, e.g. VoIP applications, chat or instant messaging applications, web browsing or file downloads.

It will be appreciated that in some cases (e.g. depending on the type of network) a new communication service may be initiated on an existing bearer. In this context a bearer is a grouping of traffic flows. Each bearer has its own General Packet Radio Service (GPRS) Tunnelling Protocol (GTP) tunnel between the each of the traversed user plane nodes in the cellular network 2 (i.e. between the PGW and the SGW and between the SGW and the eNodeB in EPS and between the GGSN and the SGSN and between the SGSN and the RNC in UMTS (but not between the RNC and the Node B where a bearer is differently indicated). In UMTS, the SGSN may be bypassed, if so-called "direct tunnelling" is applied, such that a GTP tunnel is established between the GGSN and the RNC for each bearer. Across the radio interface the bearer is identified by a radio bearer identifier which is associated with each user plane transmission across the radio interface. In regular UMTS and EPS cellular networks the same QoS is applied to all the traffic flows within the same bearer.

In a first step, step 101, the RAN node 10 obtains an indication of the quality desired for the traffic flow on the bearer carrying the service to the UE 8. The indication of the quality can represent a Quality of Service (QoS) desired or required for the service, and/or a Quality of Experience (QoE) desired or required for the service by the user of the UE 8.

In some embodiments, the indication of the quality desired for the traffic flow can be obtained by inspecting the data in the traffic flow. The inspection can be carried out by a RAN node 10. Alternatively a node in the CN 12 or an operator deployed node "above" the CN (i.e. connected to the CN via the same interface as the Internet or other external networks (i.e. via the Gi interface towards the GGSN in UMTS or via the SGi interface towards the PGW in EPS) can inspect the data in the traffic flow and pass the indication down to the RAN node 10. In preferred embodiments, Deep Packet Inspection (DPI) techniques can be used to inspect the data in the traffic flow.

In some cases, the node that inspects data in traffic flows can be configured to continuously or periodically inspect data in traffic flows, which means the node is able to detect when a new service is started. In other embodiments, information from a Radio Resource Control (RRC) part of the network 2 can indicate when a new service has been started. Information indicating the starting of a new service can be used by the RAN node 10 to trigger the execution of the further steps of the flow chart shown in Figure 2.

Once an indication of a service quality desired for a (new) traffic flow has been obtained by the RAN node 10, the method moves to step 103 in which the RAN node 10 determines whether a new (additional) bearer is required between the CN 6 (for example a gateway node, such as a GGSN in UMTS or a PGW in EPS) and the UE 8 in order to meet the desired service quality.

The way in which step 103 is performed and the criteria applied can be determined by the network operator. For example, the default type of QoS bearer is a best effort bearer, and step 103 might comprise determining whether the UE 8 is a high priority customer of the network, and if so, the RAN node 10 can decide that an additional bearer is required for that UE 8. Alternatively, the QoS desired for a particular service can be compared with the QoS provided by the existing bearer, and the establishment of a new (additional) bearer determined if the QoS provided by the existing bearer is insufficient to meet the desired QoS. The RAN node 10 may determine the desired QoS by identifying the type of communication service in the traffic flow and mapping this to a desired QoS value stored in a table, or by using policy based rules. The QoS provided by the existing bearer is conveyed from the CN 6 to the RAN 4 when the bearer is established (or when the properties of the bearer are modified).

If it is determined that no additional bearer is required for the traffic flow (for example if the existing bearer is providing a sufficient service quality for the traffic flow, or it is determined that the use of an additional bearer would not be expected to provide an improved service quality or QoE), then the method returns to step 101 and awaits the initiation of a new service (either within the existing traffic flow or as part of a new traffic flow).

If it is determined that an additional bearer is required for the traffic flow (service), then the RAN node 10 (which may be an eNodeB or and RNC) sends a message to a node in the CN 6, e.g. CN node 12 (which, depending on the type of network, may be the same node in the CN 6 with which the additional bearer is to be established, for example an SGSN (which may be an intermediate node between the RNC and the GGSN for a bearer in UMTS), or a different node in the CN 6 to the one with which the additional bearer is to be established, for example an MME). The message causes the CN node 12 to initiate a procedure to establish an additional bearer between the UE 8 and the CN 6 that has a service quality, e.g. in terms of QoS, that is suitable for the traffic flow (step 105).

In some embodiments, the RAN node 10 may make use of further information in step 103 to determine whether an additional bearer is required between the UE 8 and the CN 6. In particular, the RAN node 10 has access to radio resource management (RRM) information indicating the current radio resource load and/or channel quality in a cell of the network 2 and/or possibly the load on the transport network links transporting the user plane traffic to and from the base stations (e.g. NodeBs or eNodeBs). The RAN node 10 can therefore make use of this information and the indication of the service quality desired for the service to determine whether the additional bearer is required. For example, the RAN node 10 can determine from the RRM information whether there are sufficient resources available in the cell in which the UE 8 is located to establish an additional bearer with stricter QoS.

The flow chart in Figure 3 shows a method of operating CN node 12, the node to which the RAN node 10 transmits the message in step 105 above. As noted above, CN node 12 may be the same or a different node to the node in the CN 6 with which the additional bearer is to be established.

In step 111 of Figure 3, the CN node 12 receives the message from the RAN node 10. This message indicates that a new (additional) bearer is required between the CN 6 and the UE 8.

In response to receiving this message, the CN node 12 initiates a procedure to establish an additional bearer between the CN 6 and the UE 8. Preferably, the procedure used to establish the additional bearer is conventional.

Once the additional bearer (or bearers) has been established, the traffic flow is moved to the new bearer(s) to achieve the improvements in the service quality. The movement of the traffic flow to the new bearer is done in the conventional manner, i.e. by matching the flow with a packet filter (or packet filters) in a so called Traffic Flow Template (TFT), which is provided in the message from the RAN node 10 as well as in the message initiating the procedure to establish the additional bearer. The mapping of traffic flow on packet filter(s) as well as the consequent direction of the flow to the bearer pointed out by the TFT which the packet filter(s) belong(s) to is carried out by the GGSN or PGW for the downlink and by the UE for the uplink. Note that TFTs are provisioned both for downlink and uplink flows.

Two specific embodiments of the invention are described for an EPS network and UMTS network respectively.

Figure 4 is a block diagram illustrating various nodes that can be found in an EPS network (although it will be appreciated that not all nodes of an EPS network are shown in Figure 4). As with the general network architecture shown in Figure 1, the network 22 is conceptually divided into two parts, a RAN part 24 and a CN part 26. The RAN 24 provides the radio interface to UE 28 via an E-UTRAN NodeB (eNodeB) 30 which allows the UE 28 to connect to the network 22. The interface between the UE 28 and the eNodeB 30 is referred to as E-UTRAN Uu in EPS.

The CN 26 comprises a Mobility Management Entity (MME) 32 and Serving Gateway (SGW) 34 that are connected to the eNodeB 30 via respective interfaces referred to as S1-MME and S1-u. The MME 32 and SGW 34 are interconnected via an interface referred to as S11. The SGW 34 operates to route and forward data packets to and from the UE 28 (via the eNodeB) via a default bearer and any established dedicated bearer(s). The MME 32 is responsible for monitoring UEs 28 that are in an idle mode (i.e. they have no active traffic connections with the network 22) and it is involved in activating and deactivating bearers.

The SGW 34 is connected to a Packet Data Network (PDN) Gateway (PGW) 36 which connects the network 22 (and thus UE 28) to external packet data networks. The interface between the SGW 34 and the PGW 36 is referred to as S5, and the interface between the PGW 36 and external packet data networks is referred to as SGi.

The network 22 also comprises a Policy and Charging Rules Function (PCRF) 38 that is connected to the PGW 36 via an interface referred to as Gx, and that manages policies used to determine the choice of QoS for a bearer established with the UE 28 (as well as the charging principles and/or rates to be applied to the traffic on the bearer).

Although the CN 26 is shown as comprising several distinct nodes, it will be appreciated that the functions of several of the illustrated nodes can be implemented within a single computer, server or other device in the CN 26. Likewise, an entity shown as a node in the CN 26 in Figure 4, may be implemented by multiple interconnected nodes.

Apart from certain aspects of the operation of the eNodeB 30 and MME 32 which are described in more detail below, the nodes in the EPS network 22 operate in a conventional manner, for example as described in technical specifications published by the 3GPP (such as 3GPP TS 23.060 V11.3.0 - "3rd Generation Partnership Project; Specification Group Services and System Aspects; General Packet Radio Service (GPRS); Service description; Stage 2 (Release 11)", September 2012 and 3GPP TS 23.401 V11.3.0 - "3rd Generation Partnership Project; Technical Specification Group Services and System Aspects; General Packet Radio Service (GPRS) enhancements for Evolved Universal Terrestrial Radio Access Network (E-UTRAN) access (Release 11)", September 2012).

According to the conventional EPS standards, it is not possible for eNodeBs 30 or any other node in the RAN 24 of an EPS network 22 to trigger the establishment (or release) of dedicated EPS bearers between a UE 28 and the CN 26. Conventionally, the establishment of dedicated bearers is triggered by the UE 28 or by nodes in the CN 26. Therefore, embodiments of the invention provide an extension to the conventional S1-MME interface between the eNodeB 30 and the MME 32 (and in particular implementations - the provision of a new S1AP message on that interface) to provide the eNodeB 30 with the ability to trigger the initiation of the conventional dedicated bearer establishment procedure through the MME 32 in order to meet a required service quality.

Figure 5 is a signalling diagram illustrating the signalling required in EPS network 22 to establish a new dedicated bearer to the UE 28 in accordance with an embodiment of the invention.

A step 201 is shown that corresponds to step 101 of the method in Figure 2, and in particular indicates that the eNodeB 30 acquires the indication of the service quality desired for the traffic flow to and/or from the UE 28. Step 201 also indicates that the eNodeB 30 acquires information on the resource usage in the RAN 24. It will be appreciated that in certain embodiments the eNodeB 30 will derive the indication of the desired service quality by inspecting the data in the traffic flow to and/or from the UE 28. Alternatively, the eNodeB 30 can receive at least the indication of the desired service quality from the SGW 34 (which can obtain the indication either by inspecting the data as it is passed up to and/or down from the PGW 36 or receiving the indication from the PGW 36 after the PGW 36 inspects the data or after the PGW 36 passes the indication down from a node above the CN 26) or from the MME 32.

If, following step 103, the eNodeB 30 determines that an additional bearer (dedicated bearer) or bearers is required (and in preferred embodiments that sufficient resources are available for the dedicated bearer in the cell), then the eNodeB 30 sends a message 203 to the MME 32 which causes the MME 32 to start the conventional procedure for establishing a dedicated bearer in an EPS network. As noted above, this message 203 can be a message sent through the S1-MME interface between the eNodeB 30 and the MME 32.

In Figure 5, this message 203 is referred to as "S1AP: RAN triggered bearer resource allocation request", although it will be appreciated that other names can be used for the message. All that is required is that this message 203 causes the MME 32 to start the conventional dedicated bearer establishment procedure.

Thus, message 203 triggers the MME 32 to send a message 205 to the SGW 34 through the S11 interface. This message 205 is preferably a "GTPv2-C: Bearer resource command" message, and is defined in section 7.2.5 in 3GPP TS 29.274 V11.4.0 - "3rd Generation Partnership Project; Technical Specification Group Core Network and Terminals; 3GPP Evolved Packet System (EPS); Evolved General Packet Radio Service (GPRS) Tunnelling Protocol for Control plane (GTPv2-C); Stage 3 (Release 11)", September 2012.

In the conventional manner, the SGW 34 forwards the "GTPv2-C: Bearer resource command" message to the PGW 36 (shown as signal 207 in Figure 5), which, possibly after some interaction with the PCRF 38, initiates the Dedicated Bearer Activation procedure (shown by the signals within the bracket 209 in Figure 5). The Dedicated Bearer Activation procedure 209 is also carried out in the conventional manner, for example as described in 3GPP TS 23.401 V11.3.0 - "3rd Generation Partnership Project; Technical Specification Group Services and System Aspects; General Packet Radio Service (GPRS) enhancements for Evolved Universal Terrestrial Radio Access Network (E-UTRAN) access (Release 11)", September 2012.

It will be realised by those skilled in the art that the "GTPv2-C: Bearer resource command" message 205 is conventionally sent by the MME 32 to the SGW 34 on receipt of a "Bearer Resource Allocation Request" NAS (Non Access Stratum) message from the UE 28, which is specified 3GPP TS 24.301 V11.4.0, "3rd Generation Partnership Project; Technical Specification Group Core Network and Terminals; Non-Access-Stratum (NAS) protocol for Evolved Packet System (EPS); Stage 3 (Release 11)", September 2012. This remains the case in an EPS network 22 according to the invention, although it can of course now be triggered by the receipt of message 203 from the eNodeB 30.

An exemplary data structure for part of the new S1AP message 203 is shown in Figure 6. In order for the MME 32 to use the message 203 to trigger the transmission of a "GTPv2-C: Bearer resource command" message 205, message 203 should preferably include a subset of the bearer-related parameters that a UE 28 would include in the "Bearer Resource Allocation Request" NAS message.

In particular, the message 203 can comprise an "EPS quality of service Information Element" (IE) 40 and a "Traffic flow aggregate description" IE 42. The EPS quality of service IE 40 indicates the required/preferred QoS to be applied to the new bearer. The Traffic flow aggregate description IE 42 specifies the aggregate of one of more packet filters and their related parameters and operations, which should be used to determine the traffic that should be forwarded on the new bearer (i.e. the target flow).

A "Bearer Resource Allocation Request" NAS message from a UE 28 would normally also include an IE called the "Linked EPS bearer identity" IE which identifies the EPS bearer that the new dedicated bearer is to be associated with. This IE essentially identifies the default bearer of the PDN connection. This bearer has a corresponding E-UTRAN Radio Access Bearer (E-RAB) identity, but the eNodeB 30 has no knowledge of which E-RABs are associated with each other, or which E-RABs belong to a certain PDN connection.

Therefore, in preferred implementations, the eNodeB 30 includes the E-RAB ID 44 of the E-RAB that currently carries the concerned traffic flow in the message 203 and leaves it to the MME 32 to derive the linked EPS bearer identity from the E-RAB ID 44. In particular, the MME 32 can translate the E-RAB ID in the received message 203 into an EPS bearer identity and PDN connection, which can then be used to identify the default bearer of the PDN connection and thus the linked EPS bearer identity. Since all these pieces of information are stored in the MME, e.g. in a UE context, it would be straightforward to implement such a "multi-step" identity translation mechanism.

Although not shown in Figure 6, it will be appreciated that the S1AP message 203 can comprise additional information to the IEs 40, 42 and the E-RAB ID 44. For example, the message 203 can also comprise one or more of a "Message Type" IE, the "MME UE S1AP ID" IE and the "eNB UE S1AP ID" IE which are also present in all UE-associated S1AP signalling (except the "INITIAL UE MESSAGE" message, which initiates establishment of the S1AP connection for the UE).

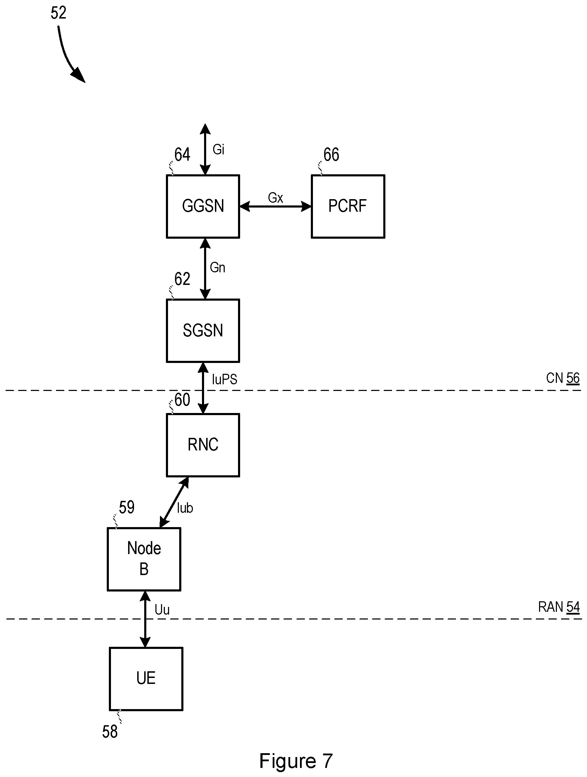

Figure 7 is a block diagram illustrating various nodes that can be found in a UMTS network (although it will be appreciated that not all nodes of a UMTS network are shown in Figure 7). As with the general network architecture shown in Figure 1, the network 52 is conceptually divided into two parts, a RAN part 54 and a CN part 56. The RAN 54 provides the radio interface to UE 58 via a NodeB 59 which is controlled by a Radio Network Controller (RNC) 60 and which allows the UE 58 to connect to the network 52. The interface between the UE 58 and the NodeB 59 is referred to as Uu in UMTS. The interface between the NodeB 59 and the RNC 60 is referred to as lub.

The CN 56 comprises a Serving GPRS Support Node (SGSN) 62 that is connected to the RNC 60 via an interface referred to as IuPS. The SGSN 62 operates to route and forward data packets to and from the UE 58, and also involved in mobility management and logical link management.

The SGSN 62 is connected to a Gateway GPRS Support Node (GGSN) 64 which connects the network 52 (and thus UE 58) to external packet data networks. The interface between the SGSN 62 and the GGSN 64 is referred to as Gn, and the interface between the GGSN 64 and external packet data networks is referred to as Gi.

The network 52 also comprises a Policy and Charging Rules Function (PCRF) 66 that is connected to the GGSN 64 via an interface referred to as Gx, and that manages policies used to determine the choice of QoS for a bearer established with the UE 58 (as well as the charging principles and/or rates to be applied to the traffic on the bearer).

As with the EPS network 22 shown in Figure 4, although the CN 56 is shown as comprising several distinct nodes, it will be appreciated that the functions of several of the illustrated nodes can be implemented within a single computer, server or other device in the CN 56. Likewise, an entity shown as a single node in the CN 56 in Figure 7 may be implemented by multiple interconnected nodes.

Apart from certain aspects of the operation of the RNC 60 and SGSN 62 which are described in more detail below, the nodes in the UMTS network 52 operate in a conventional manner, for example as described in 3GPP TS 23.060 V11.3.0 - "3rd Generation Partnership Project; Specification Group Services and System Aspects; General Packet Radio Service (GPRS); Service description; Stage 2 (Release 11)", September 2012.

As in EPS, it is not possible for RNC 60 or any other node in the RAN 54 of a UMTS network 52 to trigger the establishment (or release) of new bearers (secondary PDP contexts) between a UE 58 and the CN 56. Conventionally, the establishment of secondary PDP contexts is triggered by the UE 58 or by nodes in the CN 56. Therefore, embodiments of the invention provide an extension to the conventional IuPS interface between the RNC 60 and the SGSN 62 (and in particular implementations - the provision of a new Radio Access Network Application Part (RANAP) message on that interface) to provide the RNC 60 with the ability to trigger the initiation of the conventional secondary PDP context activation procedure by the SGSN 62 in order to meet a required service quality.

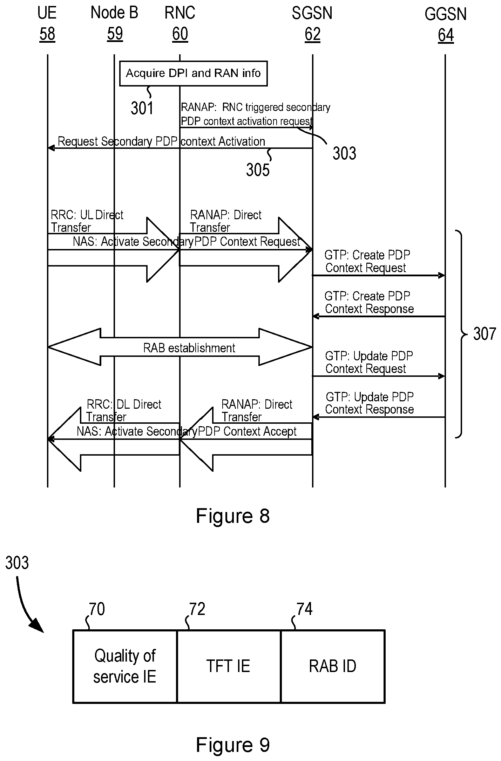

Figure 8 is a signalling diagram illustrating the signalling required in UMTS network 52 to establish a new secondary PDP context to the UE 58 in accordance with an embodiment of the invention.

A step 301 is shown that corresponds to step 101 of the method in Figure 2, and in particular indicates that the RNC 60 acquires the indication of the service quality desired for the traffic flow to and/or from the UE 58. The step 301 also indicates that the RNC 60 acquires information on the resource usage in the RAN 54. It will be appreciated that in certain embodiments the RNC 60 will derive the indication of the desired service quality by inspecting the data in the traffic flow to and/or from the UE 58. Alternatively, the RNC 60 can receive at least the indication of the required service quality from the SGSN 62 (which can obtain the indication either by inspecting the data as it is passed up to and/or down from the GGSN 64, receiving the indication from the GGSN 64 after the GGSN inspects the data or after the GGSN 64 receives the indication from a node above the CN 56).

If, following step 103, the RNC 60 determines that an additional bearer (secondary PDP context) or bearers is required (and in preferred embodiments that sufficient resources are available for the secondary PDP contexts in the cell or geographical area), then the RNC 60 sends a message 303 to the SGSN 62 which causes the SGSN 62 to start a network-initiated secondary PDP context activation procedure. The message 303 preferably indicates that a new secondary PDP context and radio access bearer with a certain service quality is required for the UE 58.

Conventionally, this procedure essentially consists of the transmission of a "Request Secondary PDP Context Activation" message 305 from the SGSN 62 to the UE 58, which results in the UE 58 initiating the secondary PDP context activation procedure (labelled with bracket 307 in Figure 8). See 3GPP TS 23.060 V11.3.0 - "3rd Generation Partnership Project; Specification Group Services and System Aspects; General Packet Radio Service (GPRS); Service description; Stage 2 (Release 11)", September 2012 and 3GPP TS 24.008 V.11.4.0 - "3rd Generation Partnership Project; Technical Specification Group Core Network and Terminals; Mobile radio interface Layer 3 specification; Core network protocols; Stage 3 (Release 11)", September 2012 for details on this procedure and its involved messages.

As noted above, the message 303 sent by the RNC 60 to the SGSN 62 can be a message sent through the IuPS interface between the RNC 60 and the SGSN 62. In Figure 8, this message 303 is referred to as "RANAP: RNC triggered secondary PDP context activation request", although it will be appreciated that other names can be used for the message. All that is required is that this message 303 causes the SGSN 62 to start the conventional secondary PDP context establishment procedure by transmitting the "Request Secondary PDP Context Activation" message as described above.

Conventionally, the SGSN 62 sends the "Request Secondary PDP Context Activation" message to the UE 58 when it has received an "Initiate PDP Context Activation Request" message from the GGSN 64 (which it was triggered to send following receipt of information from the PCRF 66, which was triggered to send the information following receipt of information from an Application Function (i.e. an application server in the network operator's domain, e.g. an IMS service)).

As noted above, the message 303 sent by the RNC 60 (which may be a RANAP message) requests a new secondary PDP context and radio access bearer with a certain service quality. The QoS parameters included in this message 303 may be reused from the Activate Secondary PDP Context Request message which is sent from the UE 58 to the SGSN 62 as the first step of the secondary PDP context activation procedure 307, and which is specified in 3GPP TS 24.008 V.11.4.0, "3rd Generation Partnership Project; Technical Specification Group Core Network and Terminals; Mobile radio interface Layer 3 specification; Core network protocols; Stage 3 (Release 11)", September 2012.

An exemplary structure for part of the RANAP message 303 is shown in Figure 9. Thus, the message 303 comprises a Quality of Service IE 70 and a TFT IE 72. The Quality of Service IE 70 indicates the required/preferred QoS to be applied to the new bearer. The TFT IE 72 specifies the aggregate of one of more packet filters and their related parameters and operations, which should be used to determine the traffic that should be forwarded on the new bearer (i.e. it is tailored for the target flow).

This information would be sufficient to allow the SGSN 62 to request the UE 58 to initiate activation of a new secondary PDP context. Thus, there is no need for the RNC 60 to concern itself with the Network layer Service Access Point Identifier (NSAPI) or the Logical Link Control Service Access Point Identifier (LLC SAPI).

However, the "Activate Secondary PDP Context Request" message would typically also include a "Linked Transaction Identifier" (Linked TI) IE which identifies the primary PDP context that the new secondary PDP context should be associated with (i.e. it serves the same purpose as the Linked EPS bearer identity IE in EPS). As in the case of EPS, the RNC 60 has no knowledge of primary and secondary PDP contexts and cannot identify the relevant primary PDP context. Therefore, similar to the EPS embodiment above, the RNC 60 may instead provide the RAB ID in the message 303 (in particular in element 74) of the RAB on which the target flow was identified, the SGSN 62 can then match that with a primary PDP context. Since all the information needed for this matching is stored in the SGSN 62, e.g. in a UE context, it would be straightforward to implement such an identity translation mechanism.

Although not shown in Figure 9, it will be appreciated that the RANAP message 303 can comprise additional information to the IEs 70, 72 and the RAB ID 74. For example, the message 303 can also comprise a "Message Type" IE which is present in all RANAP signalling.

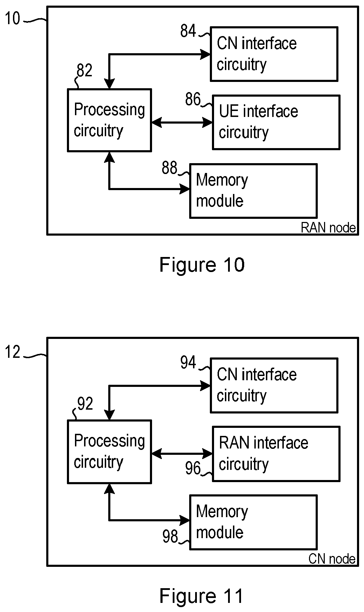

Figure 10 is a block diagram of a RAN node 10 that can be used to implement the methods described above. As noted above, the RAN node 10 can comprise an eNodeB in an EPS network or an RNC in a UMTS network. The RAN node 10 comprises processing circuitry 82 that controls the operation of the RAN node 10. The processing circuitry 82 is connected to CN interface circuitry 84 that is used to transmit signals to, and receive signals from, nodes in a core network, and UE interface circuitry 86 that allows the RAN node 10 to communicate with UEs (either directly over an air interface when the RAN node 10 is an eNodeB, or indirectly via a NodeB when the RAN node 10 is an RNC). The RAN node 10 also comprises a memory module 88 that is connected to the processing circuitry 82 and that stores information and data (for example computer code configured to cause the processing circuitry to perform the method of Figure 2) required for the operation of the RAN node 10.

Figure 11 shows a CN node 12 that can be used to implement the methods described above. As noted above, the CN node 12 can comprise an MME in an EPS network or a SGSN in a UMTS network. The CN node 12 comprises processing circuitry 92 that controls the operation of the CN node 12. The processing circuitry 92 is connected to CN interface circuitry 94 that is used to transmit signals to, and receive signals from, other nodes in the core network, and RAN interface circuitry 96 that allows the CN node 12 to communicate with nodes in the RAN. The CN node 12 also comprises a memory module 98 that is connected to the processing circuitry 92 and that stores information and data (for example computer code configured to cause the processing circuitry to perform the method of Figure 3) required for the operation of the CN node 12.

It will be appreciated that, for simplicity, only components of the RAN node 10 and CN node 12 required to illustrate the methods described above are shown in Figures 10 and 11

There is therefore provided a method of operating a node in a radio access network (and a corresponding method of operating a node in a core network), as well as corresponding nodes, that provide for improved service quality for a mobile communication device or the user of the device. As noted above, the node in the radio access network is able to make use of information on the current service in order to provide an improved quality of experience to users, and in particular embodiments, it is possible to take into account information on the current resource usage in the radio access network when determining how to improve the service quality to the user. It is also possible to prioritise different services in both uplink and downlink directions, e.g. by establishing bearers with better QoS for the traffic flows of some identified services, but not others.

Modifications and other variants of the described embodiment(s) will come to mind to one skilled in the art having the benefit of the teachings presented in the foregoing descriptions and the associated drawings. Therefore, it is to be understood that the embodiment(s) is/are not to be limited to the specific examples disclosed and that modifications and other variants are intended to be included within the scope of this disclosure. Although specific terms may be employed herein, they are used in a generic and descriptive sense only and not for purposes of limitation.

## Claims

1. A method of operating a node in a radio access network, the method comprising:
obtaining (101) by the node in the radio access network an indication of a service quality desired for a traffic flow between a mobile communication device and a core network;
obtaining by the node in the radio access network an indication of current radio resource usage for the mobile communication device and/or other mobile communication devices associated with the node in the radio access network;
determining (103) by the node in the radio access network whether an additional bearer is required between the mobile communication device and the core network based on the obtained indication of the service quality desired for the traffic flow and the obtained indication of the current radio resource usage; and
sending (105) by the node in the radio access network a message to a node in the core network to initiate a procedure to establish an additional bearer between the mobile communication device and the core network if it is determined that an additional bearer is required between the mobile communication device and the core network.

2. A method as claimed in claim 1, wherein the step of obtaining (101) an indication of the service quality required for a traffic flow between the mobile communication device and the core network comprises inspecting the data carried in the traffic flow to determine the desired service quality.

3. A method as claimed in claim 1, wherein the step of obtaining (101) an indication of the service quality desired for a traffic flow between the mobile communication device and the core network comprises obtaining the indication of the service quality from another node in the core network.

4. A method as claimed in any preceding claim,
wherein the indication of current radio resource usage comprises current cell load and/or channel quality for the mobile communication device and/or other mobile communication devices associated with the node in the radio access network.

5. A method as claimed in any preceding claim, wherein the message comprises an indication of the desired service quality and/or the identity of an existing bearer between the mobile communication device and the core network that is carrying the traffic flow.

6. A node (10; 30; 60) for use in a radio access network (4; 24; 54) part of a communication network (2; 22; 52), the node comprising processing circuitry (82) that is configured to:
obtain an indication of a service quality desired for a traffic flow between a mobile communication device (8; 28; 58) and a core network (6; 26; 56);
obtain an indication of current radio resource usage for the mobile communication device (8; 28; 58) and/or other mobile communication devices associated with the node (10, 30, 60) in the radio access network (4; 24; 54);
determine whether an additional bearer is required between the mobile communication device (8, 28, 58) and the core network (6, 26, 56) based on the obtained indication of the service quality desired for the traffic flow and the obtained indication of the current radio resource usage; and
initiate transmission of a message (203; 303) to a node (12; 32; 62) in the core network to initiate a procedure to establish an additional bearer between the mobile communication device and the core network if it is determined that an additional bearer is required between the mobile communication device and the core network.

7. A node (10; 30; 60) as claimed in claim 6, wherein the message (203; 303) comprises an indication of the desired service quality and/or the identity of an existing bearer between the mobile communication device (8; 28; 58) and the core network (6; 26; 56) that is carrying the traffic flow.

8. A computer program product, comprising computer-readable code stored thereon, the computer-readable code being configured such that, on execution by a computer or suitable processing circuitry, the computer or processing circuitry performs the method claimed in any of claims 1 - 5.

## Patentansprüche

1. Verfahren zum Betreiben eines Knotens in einem Funkzugangsnetz, wobei das Verfahren Folgendes umfasst:
Erhalten (101) durch den Knoten in dem Funkzugangsnetz einer Angabe einer Dienstqualität, die für einen Verkehrsstrom zwischen einem mobilen Kommunikationsgerät und einem Kernnetz erwünscht ist;
Erhalten durch den Knoten in dem Funkzugangsnetz einer Angabe der aktuellen Funkbetriebsmittelnutzung für das mobile Kommunikationsgerät und/oder andere mobile Kommunikationsgeräte, die mit dem Knoten in dem Funkzugangsnetz verknüpft sind;
Bestimmen (103) durch den Knoten in dem Funkzugangsnetz, ob ein zusätzlicher Träger zwischen dem mobilen Kommunikationsgerät und dem Kernnetz auf Basis der erhaltenen Angabe der Dienstqualität, die für den Verkehrsfluss erwünscht ist, und der erhaltenen Angabe der aktuellen Funkbetriebsmittelnutzung erforderlich ist; und
Senden (105) durch den Knoten in dem Funkzugangsnetz einer Nachricht zu einem Knoten in dem Kernnetz, um ein Verfahren zum Einrichten eines zusätzlichen Trägers zwischen dem mobilen Kommunikationsgerät und dem Kernnetz einzuleiten, wenn bestimmt wird, dass ein zusätzlicher Träger zwischen dem mobilen Kommunikationsgerät und dem Kernnetz erforderlich ist.

2. Verfahren nach Anspruch 1, wobei der Schritt des Erhaltens (101) einer Angabe der Dienstqualität, die für einen Verkehrsfluss zwischen dem mobilen Kommunikationsgerät und dem Kernnetz erforderlich ist, das Untersuchen der Daten, die in dem Verkehrsfluss befördert werden, um die gewünschte Dienstqualität zu bestimmen, umfasst.

3. Verfahren nach Anspruch 1, wobei der Schritt des Erhaltens (101) einer Angabe der Dienstqualität, die für einen Verkehrsfluss zwischen dem mobilen Kommunikationsgerät und dem Kernnetz erwünscht ist, das Erhalten der Angabe der Dienstqualität von einem anderen Knoten in dem Kernnetz umfasst.

4. Verfahren nach einem der vorherigen Ansprüche, wobei die Angabe der aktuellen Funkbetriebsmittelnutzung die aktuelle Zellenlast und/oder Kanalqualität für das mobile Kommunikationsgerät und/oder andere mobile Kommunikationsgeräte, die mit dem Knoten in dem Funkzugangsnetz verknüpft sind, umfasst.

5. Verfahren nach einem der vorherigen Ansprüche, wobei die Nachricht eine Angabe der gewünschten Dienstqualität und/oder der Identität eines vorhandenen Trägers zwischen dem mobilen Kommunikationsgerät und dem Kernnetz, das den Verkehrsfluss befördert, umfasst.

6. Knoten (10; 30; 60) zur Verwendung in einem Funkzugangsnetz (4; 24; 54), das Teil eines Kommunikationsnetzes (2; 22; 52) ist, wobei der Knoten eine Verarbeitungsschaltungsanordnung (82) umfasst, die konfiguriert ist, um:
eine Angabe einer Dienstqualität zu erhalten, die für einen Verkehrsfluss zwischen einem mobilen Kommunikationsgerät (8; 28; 58) und einem Kernnetz (6; 26; 56) erwünscht ist;
eine Angabe der aktuellen Funkbetriebsmittelnutzung für das mobile Kommunikationsgerät (8; 28; 58) und/oder andere mobile Kommunikationsgeräte, die mit dem Knoten (10, 30, 60) in dem Funkzugangsnetz (4; 24; 54) verknüpft sind, zu erhalten;
zu bestimmen, ob ein zusätzlicher Träger zwischen dem mobilen Kommunikationsgerät (8, 28, 58) und dem Kernnetz (6, 26, 56) auf Basis der erhaltenen Angabe der Dienstqualität, die für den Verkehrsfluss erwünscht ist, und der erhaltenen Angabe der aktuellen Funkbetriebsmittelnutzung erforderlich ist; und
eine Übertragung einer Nachricht (203; 303) zu einem Knoten (12; 32; 62) in dem Kernnetz einzuleiten, um ein Verfahren zum Einrichten eines zusätzlichen Trägers zwischen dem mobilen Kommunikationsgerät und dem Kernnetz einzuleiten, wenn bestimmt wird, dass ein zusätzlicher Träger zwischen dem mobilen Kommunikationsgerät und dem Kernnetz erforderlich ist.

7. Knoten (10; 30; 60) nach Anspruch 6, wobei die Nachricht (203; 303) eine Angabe der gewünschten Dienstqualität und/oder der Identität eines vorhandenen Trägers zwischen dem mobilen Kommunikationsgerät (8; 28; 58) und dem Kernnetz (6; 26; 56), das den Verkehrsfluss befördert, umfasst.

8. Computerprogrammprodukt, umfassend einen computerlesbaren Code, der darin gespeichert ist, wobei der computerlesbare Code derart konfiguriert ist, dass beim Ausführen durch einen Computer oder eine geeignete Verarbeitungsschaltungsanordnung der Computer oder die Verarbeitungsschaltungsanordnung das Verfahren nach einem der Ansprüche 1 - 5 durchführt.

## Revendications

1. Procédé d'exploitation d'un noeud dans un réseau d'accès radio, le procédé comprenant :
l'obtention (101) par le noeud dans le réseau d'accès radio d'une indication d'une qualité de service voulue pour un flux de trafic entre un dispositif de communication mobile et un réseau central ;
l'obtention par le noeud dans le réseau d'accès radio d'une indication d'utilisation actuelle de ressources radio pour le dispositif de communication mobile et/ou d'autres dispositifs de communication mobile associés au noeud dans le réseau d'accès radio ;
la détermination (103) par le noeud dans le réseau d'accès radio de savoir si une porteuse supplémentaire est nécessaire entre le dispositif de communication mobile et le réseau central basée sur l'indication obtenue de la qualité de service voulue pour le flux de trafic et l'indication obtenue de l'utilisation actuelle de ressources radio ; et
l'envoi (105) par le noeud dans le réseau d'accès radio d'un message à un noeud dans le réseau central pour lancer une procédure pour établir une porteuse supplémentaire entre le dispositif de communication mobile et le réseau central s'il est déterminé qu'une porteuse supplémentaire est nécessaire entre le dispositif de communication mobile et le réseau central.

2. Procédé selon la revendication 1, dans lequel l'étape d'obtention (101) d'une indication de la qualité de service nécessaire pour un flux de trafic entre le dispositif de communication mobile et le réseau central comprend l'inspection des données acheminées dans le flux de trafic pour déterminer la qualité de service voulue.

3. Procédé selon la revendication 1, dans lequel l'étape d'obtention (101) d'une indication de la qualité de service voulue pour un flux de trafic entre le dispositif de communication mobile et le réseau central comprend l'obtention de l'indication de la qualité de service d'un autre noeud dans le réseau central.

4. Procédé selon l'une quelconque des revendications précédentes,
dans lequel l'indication d'utilisation actuelle de ressources radio comprend une charge de cellule actuelle et/ou une qualité de canal pour le dispositif de communication mobile et/ou d'autres dispositifs de communication mobile associés au noeud dans le réseau d'accès radio.

5. Procédé selon l'une quelconque des revendications précédentes, dans lequel le message comprend une indication de la qualité de service voulue et/ou l'identité d'une porteuse existante entre le dispositif de communication mobile et le réseau central qui achemine le flux de trafic.

6. Noeud (10 ; 30 ; 60) pour son utilisation dans un réseau d'accès radio (4; 24 ; 54) une partie d'un réseau de communication (2; 22 ; 52), le noeud comprenant un circuit de traitement (82) qui est configuré pour :
obtenir une indication d'une qualité de service voulue pour un flux de trafic entre un dispositif de communication mobile (8 ; 28 ; 58) et un réseau central (6 ; 26 ; 56);
obtenir une indication d'utilisation actuelle de ressources radio pour le dispositif de communication mobile (8 ; 28 ; 58) et/ou d'autres dispositifs de communication mobile associés au noeud (10, 30, 60) dans le réseau d'accès radio (4 ; 24 ; 54);
déterminer si une porteuse supplémentaire est nécessaire entre le dispositif de communication mobile (8, 28, 58) et le réseau central (6, 26, 56) basé sur l'indication obtenue de la qualité de service voulue pour le flux de trafic et l'indication obtenue de l'utilisation actuelle de ressources radio ; et
lancer la transmission d'un message (203 ; 303) à un noeud (12 ; 32 ; 62) dans le réseau central pour lancer une procédure pour établir une porteuse supplémentaire entre le dispositif de communication mobile et le réseau central s'il est déterminé qu'une porteuse supplémentaire est nécessaire entre le dispositif de communication mobile et le réseau central.

7. Noeud (10 ; 30 ; 60) selon la revendication 6, dans lequel le message (203 ; 303) comprend une indication de la qualité de service voulue et/ou l'identité d'une porteuse existante entre le dispositif de communication mobile (8 ; 28 ; 58) et le réseau central (6 ; 26 ; 56) qui achemine le flux de trafic.

8. Produit de programme informatique, comprenant un code lisible par ordinateur stocké dans celui-ci, le code lisible par ordinateur étant configuré de telle sorte que, sur l'exécution par un ordinateur ou circuit de traitement adapté, l'ordinateur ou circuit de traitement met en oeuvre le procédé selon l'une quelconque des revendications 1-5.
